# EUROPÄISCHE PATENTSCHRIFT

(11) **EP 2 399 331 B1**
(45) Veröffentlichungstag und Bekanntmachung des Hinweises auf die Patenterteilung: **21.11.2012**
(21) Anmeldenummer: 10700392.3
(22) Anmeldetag: 04.01.2010
(51) Int. Cl.: H02J 7/00, B60R 16/03, H02H 11/00, H02J 7/14

(54) **VERPOLSCHUTZEINRICHTUNG**
POLARITY REVERSAL PROTECTION DEVICE
DISPOSITIF DE PROTECTION CONTRE L'INVERSION DE POLARITÉ

(30) Priorität: 18.02.2009 DE 102009009398
(43) Veröffentlichungstag der Anmeldung: 28.12.2011
(73) Patentinhaber: Auto-Kabel Managementgesellschaft mbH, 79688 Hausen i.W. (DE)
(72) Erfinder: GRONWALD, Frank, 50181 Bedburg (DE); LIETZ, Franz-Josef, 46049 Oberhausen-Lirich (DE)
(74) Vertreter: Cohausz & Florack
(86) Internationale Anmeldenummer: PCT/EP2010/050004
(87) Internationale Veröffentlichungsnummer: WO 2010/094514

(56) Entgegenhaltungen:
- EP-A2- 1 206 025
- DE-A1- 10 059 800
- DE-A1- 10 111 252
- DE-A1-102005 007 123

## Beschreibung

Die Anmeldung betrifft im Allgemeinen eine Verpolschutzeinrichtung für Kraftfahrzeuge mit einer Detektoreinrichtung, einem ersten mit der Detektoreinrichtung und einem Versorgungsstützpunkt verbundenem Anschlusselement, einem zweiten mit der Detektoreinrichtung und einem elektrisch mit dem Potential der Fahrzeugkarosserie verbindbaren Anschlusselement, wobei die Detektoreinrichtung derart gebildet ist, dass im Falle einer Verpolung des Versorgungsstützpunktes das erste Anschlusselement mit dem zweiten Anschlusselement über die Detektoreinrichtung elektrisch miteinander verbunden sind.

Bordnetze von Kraftfahrzeugen werden in der heutigen Zeit immer unfangreicher und umfassen eine Vielzahl an unterschiedlichen Verbrauchern. Die Verbraucher werden im Allgemeinen von einer Fahrzeugbatterie mit Energie versorgt. Viele dieser Verbraucher sind gegenüber einer Verpolung empfindlich. Beispiele hierfür sind Halbleiterschalter oder auch Elektrolytkondensatoren, die bei einer falschen Polung einer angeschlossenen Versorgungsbatterie beschädigt bzw. zerstört werden können. Insbesondere bei Elektrolytkondensatoren kann es aufgrund einer nicht korrekt gepolten Spannung zu erheblichen Schäden kommen, da Elektrolytkondensatoren explodieren können und in Folge der Explosion weitere Bauelemente in ihrer Nähe beschädigt werden. Auch können jegliche Transistorschaltungen leicht durch eine Verpolung zerstört werden.

Ferner kann es in Folge von Überspannungen zu Beschädigungen von Verbraucher eines Bordnetzes kommen. Für einige Verbraucher gibt es bestimmte maximal zulässige Spannungsgrenzen. Bei höheren Spannungswerten können die Verbraucher zerstört werden.

Zu einer Verpolung kann es insbesondere bei einem Fremdstart kommen. Wenn an einen Versorgungsstützpunkt (Fremdstartstützpunkt) der falsche Pol der Fremdbatterie oder eine Fremdbatterie mit einer zu hohen Spannung, beispielsweise bei einem Fremdstart eines PKWs durch einen LKW, angeschlossen wird, kann es zu erheblichen Beschädigungen des Bordnetzes kommen. Die Folgen sind ein Ausfall des Fahrzeugs und hohe Reparaturkosten.

Zum Schutz gegen Verpolung können zentrale Verpolschutzschaltungen eingesetzt werden. Diese Verpolschutzschaltungen sind aus dem Stand der Technik bekannt. Die DE 101 11 25 A1 offenbart beispielsweise eine Verpolschutzschaltung, die ein pyrotechnisches Trennelement aufweist. Im Falle einer Verpolung wird das pyrotechnische Trennelement gezündet und das Bordnetz von der Batterie getrennt. Nachteilig bei dieser Verpolschutzschaltung ist jedoch, dass verschiedene Bauteile, wie beispielsweise das Trennelement oder die Detektoreinrichtung, zerstört werden.

Eine Möglichkeit, eine Zerstörung von Bauteilen und eine damit verbundene aufwendige Reparatur zu vermeiden, ist es, die B6-Gleichrichter-Dioden Schaltung des im Fahrzeug vorhandenen Generators zu nutzen. Aus der Offenlegungsschrift DE 100 19 588 A1 ist eine Fremdstarteinrichtung bekannt, bei der mit Hilfe der im Generator vorhandenen Dioden der durch die Verpolung auftretende Strom abgeleitet wird. Somit wird eine Zerstörung von Bauelemente des Bordnetzes und der Verpolschutzeinrichtung vermieden.

Die Dioden des Generators sind jedoch im Allgemeinen nicht für hohe Ströme ausgelegt, insbesondere nicht für einen hohen Dauerstrom. Ein solcher Strom erzeugt eine erhebliche thermische Wärme in den Dioden. Diese thermische Wärme kann bei einem Dauerstrom in der Diodenschaltung des Generators nicht ausreichend schnell abgeleitet werden. Dies kann zu einer Zerstörung der Dioden führen, der Strompfad wird unterbrochen und das Bordnetz ist nicht mehr geschützt. Darüber hinaus ist es wünschenswert, Dioden kleinerer Dimensionierung im Generator verwenden zu können.

Ferner kommen in Hybridfahrzeugen zumindest zwei unterschiedliche Batterien zum Einsatz, wobei eine Hochvoltbatterie hohe Spannungen (z.B. über 100 V bis 1 kV) für den Elektroantrieb liefert, während eine Niedervoltbatterie das Bordnetz mit einer geringeren Spannung (z.B. 12 V, 24 V, 48 V) versorgt. Im Allgemeinen ist der Generator zwischen Verbrennungsmotor und Hochvoltbatterie angeordnet und kann diese laden. Die Bordnetz-Batterie ist über einen Wechselrichter und einen Gleichspannungswandler mit dem Generator verbunden. Der Fremdstartstützpunkt ist jedoch direkt mit der Bordnetz-Batterie verbunden. Infolgedessen steht die Gleichrichterschaltung des Generators bei Hybridfahrzeugen für einen Verpolschutz nicht mehr zur Verfügung.

Wie zuvor erläutert, führt ein hoher Strom in den Dioden des Generators zu einer erheblichen thermischen Wärme in den Dioden. Diese thermische Wärme kann die Diodenschaltung bei nicht ausreichender thermischer Ableitung zerstören. Heutzutage wird für Fahrzeuge, insbesondere für Hybridfahrzeuge eine thermische Festigkeit für Detektoreinrichtungen, die beispielsweise durch Dioden gebildet sind, für einen Strom von 1.000A über 6 Sekunden gefordert. Fließt ein Strom länger als diese Zeit, können die Dioden zerstört werden. Eine Zerstörung der Dioden in der Gleichrichterschaltung führte dazu, dass der Strom nicht mehr über die Detektoreinrichtung abgeleitet würde, sondern in das Bordnetz eingeleitet wird. Die hierbei entstehenden Schäden sind erheblich größer und müssen zwingend vermieden werden. Daher wird gefordert, dass auch nach 6 Sekunden und 1.000A eine Fehlpolung des Bordnetzes vermieden wird.

Die DE 100 59 800 A1 betrifft den Schutz einer gleichspannungsversorgten elektronischen Schaltungseinheit von Kraftfahrzeugen vor Beschädigung bei Falschpolung der Gleichspannungsversorgung, wobei eine Diode derart zwischen Anschlüsse zum Anschließen einer Batterie geschaltet wird, dass es bei der Falschpolung die Anschlüsse kurzschließt, und wobei bei der Falschpolung Abwärme der Diode genutzt wird, um die Diode und die Schaltungseinheit von der Batterie elektrisch zu trennen.

In der EP 1 206 025 A2 sind Vorrichtungen zum Verpolschutz elektrischer Komponenten vorgeschlagen. Sie weisen zumindest einen Anschluss für eine elektrische Energieversorgung auf. Es sind Verpolschutzmittel vorgesehen, die im Falle eines verpolten Anschlusses der Energieversorgung die Energiezufuhr zu zumindest einer elektrischen Komponente beeinflussen, wobei zumindest ein Verpolschutzmittel Teil einer Spannungserhöhungsschaltung ist zur Spannungserhöhung für die elektrische Komponente und/oder zumindest eine weitere elektrische Komponente.

Die DE 10 2005 007123 A1 beschreibt ein Bordnetz für ein Kraftfahrzeug, umfassend einen Tiefsetzsteller mit einem ersten und einem zweiten Eingangsanschluss, zwischen denen eine Eingangsspannung anlegbar ist, einem ersten und einem zweiten Ausgangsanschluss, zwischen denen eine Ausgangsspannung bereitstellbar ist, wobei der Tiefsetzsteller einen Schalter, eine Induktivität, eine Diode und einen Kondensator umfasst, wobei der Schalter und die Diode seriell zwischen den ersten und den zweiten Eingangsanschluss gekoppelt sind, wobei die Induktivität zwischen einem Verbindungspunkt des Schalters und der Diode und dem ersten Ausgangsanschluss gekoppelt ist, wobei der Kondensator zwischen den ausgangsseitigen Anschluss der Induktivität und den zweiten Ausgangsanschluss gekoppelt ist, und eine Verpolschutzvorrichtung, wobei die Verpolschutzvorrichtung zwischen dem Verbindungspunkt zwischen dem Schalter und der Diode seriell zur Diode angeordnet ist.

Für einen sicheren Schutz vor Verpolungsschäden in einem Bordnetz eines Fahrzeugs ist bei der DE 101 11 252 A1 eine Anordnung zum Schutz von Verbrauchern vorgesehen, wobei ein Bordnetz zur Speisung der Verbraucher und ein parallel zum Bordnetz angeordnetes Begrenzungselement und eine Auslöseeinheit zur Auslösung eines Trennelements vorgesehen sind. Dabei weist die Auslöseeinheit mindestens ein in einer pyrotechnischen Ladung angeordnetes Halbleiterelement zum Zünden der Ladung auf, die das Trennelement öffnet. Ausgehend hiervon lag dem Gegenstand die Aufgabe zugrunde, eine Verpolung des Kraftfahrzeugbordnetzes über einen Fremdstartstützpunkt bei geringem konstruktivem und elektrischem Aufwand sicher zu verhindern.

Diese Aufgabe wird gegenständlich durch eine Verpolschutzeinrichtung nach Anspruch 1 gelöst.

Es ist erkannt worden, dass die Detektoreinrichtung sich im Verpolfall thermisch erwärmt und diese thermische Erwärmung genutzt werden kann, um die Auslöseeinrichtung zu aktivieren. Fließt ein Dauerstrom von mehreren 100A über die Detektoreinrichtung, wird die erzeugte Wärme zunächst über geeignete Kühlmittel an der Detektoreinrichtung abgeleitet. Ab einem gewissen Zeitpunkt reicht die Kühlung jedoch nicht mehr aus, um eine Zerstörung der Detektoreinrichtung zu verhindern. Bevor dies passiert, muss der Versorgungsstützpunkt (Fremdstartstützpunkt) vom Bordnetz getrennt werden, um eine weitere Verpolung zu verhindern. Es ist erkannt worden, dass die thermische Abwärme der Detektoreinrichtung derart genutzt werden kann, dass diese die Auslöseeinrichtung aktiviert. Der Strom, der im Verpolfall durch die Detektoreinrichtung fließt, erhitzt die Detektoreinrichtung. Diese in der Detektoreinrichtung selbst erzeugte Joulesche Wärme wird dazu genutzt, die Auslöseeinrichtung thermisch zu aktivieren.

Bei einer thermischen Aktivierung der Auslöseeinrichtung wird der Versorgungsstützpunkt von dem ersten Anschlusselement elektrisch getrennt. Das führt dazu, dass das den Verpolstrom verursachende Ereignis - die Fehlpolung am Versorgungsstützpunkt - elektrisch von dem Rest des Bordnetzes getrennt wird. Zwar ist danach keine elektrische Verbindung des Versorgungsstützpunktes mit dem Bordnetz bzw. der Kraftfahrzeugbatterie möglich, jedoch ist verhindert worden, dass das Bordnetz zerstört wird.

Die Batterie, die regelmäßig mit ihrem Pluspol mit dem Bordnetz verbunden ist und ebenfalls mit dem Pluspol an dem Versorgungsstützpunkt verbunden ist, bleibt nach dem Auslösen der Auslöseeinrichtung mit dem Bordnetz verbunden. Der Minuspol der Batterie ist regelmäßig mit der Fahrzeugkarosserie verbunden und bildet somit regelmäßig das elektrische Potential der Fahrzeugkarosserie.

Gemäß eines vorteilhaften Ausführungsbeispieles wird vorgeschlagen, dass die Detektoreinrichtung, das erste Anschlusselement und die Auslöseeinrichtung thermisch derart miteinander gekoppelt sind, dass im Falle einer Verpolung die in der Detektoreinrichtung durch den in der Detektoreinrichtung fließenden Strom erzeugte Joulesche Wärme die Auslöseeinrichtung thermisch aktiviert. Um sicherzustellen, dass die in der Detektoreinrichtung selbst erzeugte Joulesche Wärme die thermische Aktivierung der Auslöseeinrichtung bewirkt, muss die Detektoreinrichtung mit der Auslöseeinrichtung thermisch gekoppelt sein. Da sowohl die Detektoreinrichtung als auch die Auslöseeinrichtung an dem ersten Anschlusselement angeordnet sind, bietet das erste Anschlusselement die thermische Kopplung zwischen der Detektoreinrichtung und der Auslöseeinrichtung. Über das erste Anschlusselement wird die in der Detektoreinrichtung erzeugte Joulesche Wärme geleitet und zu der Auslöseeinrichtung geführt, derart, dass diese nach einer gewissen Zeit der Verpolung thermische aktiviert wird. Beispielsweise ist es möglich, dass nach 6 Sekunden mit einem Strom von 1.000A über der Detektoreinrichtung die Wärme in der Auslöseeinrichtung ausreichend groß ist, dass diese thermisch aktiviert wird und die den Versorgungsstützpunkt von dem ersten Anschlusselement trennt.

Eine konstruktiv besonders einfache Möglichkeit der Anordnung der Detektoreinrichtung kann daran bestehen, dass das erste Anschlusselement als ein eine Aufnahme aufweisendes Flachteil gebildet ist und dass die Detektoreinrichtung kraftschlüssig in der Aufnahme angeordnet ist. Bei den Ausführungsbeispielen kann die Detektoreinrichtung zwei Kontakte aufweisen, wobei ein erster Kontakt der Detektoreinrichtung elektrisch mit dem ersten Anschlusselement verbunden sein kann und ein zweiter Kontakt der Detektoreinrichtung elektrisch mit dem zweiten Anschlusselement verbunden sein kann.

Der erste Kontakt kann so geformt sein, dass dieser zumindest teilweise in der Aufnahme des ersten Anschlusselementes angeordnet werden kann. Dies kann beispielsweise kraftschlüssig sein. Auch ist es möglich, den ersten Kontakt der Detektoreinrichtung formangepasst in der Aufnahme anzuordnen, wobei der erste Kontakt beispielsweise mittels eines leitfähigen Klebers in der Aufnahme verklebt sein kann. Auch ist es möglich, dass der erste Kontakt der Detektoreinrichtung stoffschlüssig mit zumindest Teilen der Mantelfläche der Aufnahme verbunden ist. Beispielsweise ist es möglich, die Detektoreinrichtung, bzw. zumindest den ersten Kontakt mittels Reibschweißen oder Ultraschallschweißen oder sonstiger Schweißverfahren in der Aufnahme stoffschlüssig anzuordnen. Durch die kraftschlüssige oder stoffschlüssige Anordnung des ersten Kontakts der Detektoreinrichtung zumindest teilweise in der Aufnahme ist es möglich, dass eine thermische Kopplung zwischen dem ersten Anschlusselement und der Detektoreinrichtung gewährleistet ist.

Die thermische Kopplung zwischen Anschlusselement und Detektoreinrichtung kann derart sein, dass das Anschlusselement sowohl als Kühlkörper dient, als auch als leitendes Element, um die im Verpolfall in der Detektoreinrichtung erzeugte Joulesche Wärme zu der Auslöseeinrichtung zu leiten, so dass diese bei einer bestimmten Dauer eines Verpolstroms thermische aktiviert wird.

Die Aufnahme kann gemäß eines vorteilhaften Ausführungsbeispiels ein in dem Flachteil gebildeter Topf sein. Der Topf kann beispielsweise mittels Tiefziehen in das Flachteil eingebracht werden. Der Topf kann zylindrisch oder sich verjüngend geformt sein. Der Topf kann einen Boden aufweisen oder auch einen Durchgang zwischen der Oberseite und der Unterseite des Flachteils aufweisen. Durch das Formen eines Topfes in dem Flachteil ist es konstruktiv besonders einfach möglich, die Aufnahme für die Detektoreinrichtung zu bilden.

Gemäß eines vorteilhaften Ausführungsbeispiels ist das zweite Anschlusselement als Flachteil gebildet. Sowohl das erste Anschlusselement als auch das zweite Anschlusselement kann als Flachteil gebildet sein. Die Flachteile können so gebildet sein, dass diese sich in besonders einfacher Weise elektrisch als auch mechanisch mit elektrischen Flachleitern innerhalb des Kraftfahrzeugs verbinden lassen. Die Flachteile können beispielsweise aus Nichteisenmetall, z.B. Kupfer, Nickel, Zinn oder Legierungen davon oder Aluminium oder Legierungen davon gebildet sein. Die Flachteile können einen Querschnitt aufweisen, der derart ist, dass dieser zu dem Querschnitt des Anschlusskabels, welches ebenfalls ein Flachteil sein kann, korrespondiert.

Gemäß eines vorteilhaften Ausführungsbeispiels wird vorgeschlagen, dass das erste Anschlusselement und das zweite Anschlusselement überlappend, elektrisch isoliert zueinander verbunden sind, wodurch ein besonders kleinbauender Verpolschutz realisiert werden kann.

Auch wird vorgeschlagen, dass die Detektoreinrichtung zumindest teilweise zwischen dem ersten und dem zweiten Anschlusselement derart angeordnet ist, dass im Falle einer Verpolung des Versorgungsstützpunktes das erste Anschlusselement mit dem zweiten Anschlusselement über die Detektoreinrichtung elektrisch miteinander verbunden sind.

Wie zuvor bereits erläutert, kann die Detektoreinrichtung zwei Kontakte aufweisen. Ein erster Kontakt der Detektoreinrichtung kann an dem ersten Anschlusselement elektrisch angeordnet sein. Ein zweiter Kontakt der Detektoreinrichtung kann an dem zweiten Anschlusselement angeordnet sein. Beispielsweise ist es möglich, dass das erste Anschlusselement eine Aufnahme für den ersten Kontakt der Detektoreinrichtung aufweist und das zweite Anschlusselement ebenfalls eine Aufnahme für den zweiten Kontakt der Detektoreinrichtung aufweist. Die erste Aufnahme kann beispielsweise ein Topf sein. Die zweite Aufnahme kann beispielsweise eine Bohrung sein, die einen als Pin gebildeten zweiten Kontakt der Detektoreinrichtung aufnimmt. Der Pin kann beispielsweise in der zweiten Aufnahme verlötet oder verschweißt werden.

Im Normalbetrieb ist die Detektoreinrichtung derart gebildet, dass der erste Kontakt gegenüber dem zweiten Kontakt im Wesentlichen isoliert ist. Ein Stromfluss über die Detektoreinrichtung ist in diesem Fall nicht möglich. In Verpolfall wird das erste Anschlusselement auf ein Potenzial negativer als das Potential der Fahrzeugkarosserie gebracht. Die Spannungsdifferenz zwischen dem ersten Anschlusselement und dem zweiten Anschlusselement ist derart, dass die Detektoreinrichtung leitend wird und ein Stromfluss von dem ersten Anschlusselement über die Detektoreinrichtung zu dem zweiten Anschlusselement und von dort zu dem Potenzial der Fahrzeugkarosserie möglich ist. Die Spannung über der Detektoreinrichtung kann in diesem Fall beispielsweise wenige Volt, beispielsweise zwischen 0,7 und 1,5V betragen. Der Strom, der über die Detektoreinrichtung fließt, kann mehrere hundert oder gar tausend Ampere betragen.

Die Detektoreinrichtung heizt sich durch den Stromfluss auf. Die Wärmeableitung über das erste Anschlusselement ist ab einem gewissen Zeitpunkt nicht mehr ausreichend, so dass die Detektoreinrichtung zerstört würde. Durch die Erwärmung der Detektoreinrichtung wird jedoch gegenständlich die Auslöseeinrichtung thermisch aktiviert. Ab einem bestimmten Zeitpunkt, beispielsweise nach 6 Sekunden bei einem Stromfluss von 1.000A ist die Detektoreinrichtung derart durch den Strom über die Detektoreinrichtung aufgeheizt, dass die Auslöseeinrichtung thermisch aktiviert wird und die Verbindung zwischen dem Versorgungsstützpunkt und dem ersten Anschlusselement trennt.

Die Detektoreinrichtung kehrt hiernach in ihren Normalbetrieb zurück, da das Potential des ersten Anschlusselementes wieder positiver als das Potential des zweiten Anschlusselementes und somit der Fahrzeugkarosserie ist und sperrt die Verbindung zwischen dem ersten Anschlusselement und dem zweiten Anschlusselement. Das Kraftfahrzeug kann hiernach weiterhin normal betrieben werden, da dass Bordnetz weiterhin an dem Pluspol anliegt. Eine Starthilfe über den Versorgungsstützpunkt ist jedoch nicht mehr möglich, da die Auslöseeinrichtung die Verbindung zwischen dem Versorgungsstützpunkt und dem ersten Anschlusselement getrennt hat.

Gemäß eines vorteilhaften Ausführungsbeispiels wird vorgeschlagen, dass ein erster Anschluss der Auslöseeinrichtung mit dem ersten Anschlusselement verbunden ist und dass ein zweiter Anschluss der Auslöseeinrichtung kraftschlüssig mit dem ersten Anschluss verbunden ist. Der zweite Anschluss ist mit dem Versorgungsstützpunkt elektrisch verbunden. Es ist möglich, dass die Auslöseeinrichtung aus zwei miteinander verbundenen Anschlüssen, die jedoch mechanisch und elektrisch voneinander trennbar sind, gebildet ist. Der erste Anschluss kann unmittelbar an dem ersten Anschlusselement angeformt sein. Beispielsweise ist es möglich, dass der erste Anschluss aus dem ersten Anschlusselement geformt ist oder stoffschlüssig mit dem ersten Anschlusselement verbunden ist oder an dem ersten Anschlusselement kraftschlüssig, beispielsweise mittels Verschrauben, angeordnet ist. Der zweite Anschluss korrespondiert mit dem ersten Anschluss derart, dass ein Kraftschluss zwischen den beiden Anschlüssen möglich ist. Dieser Kraftschluss kann bei der thermischen Aktivierung gelöst werden, so dass die beiden Anschlüsse sowohl elektrisch als auch mechanisch voneinander getrennt werden.

Gemäß eines vorteilhaften Ausführungsbeispiels wird vorgeschlagen, dass die Auslöseeinrichtung einen einstückig aus dem ersten Anschlusselement gebildeten ersten Anschluss aufweist und dass ein zweiter Anschluss der Auslöseeinrichtung kraftschlüssig mit dem ersten Anschluss verbunden ist. Beispielsweise ist es möglich, mittels eines spanlosen oder spanenden Formgebungsprozesses oder eines Anformungsprozesses das erste Anschlusselement derart zu formen, dass der erste Anschluss gebildet wird. Der erste Anschluss kann beispielsweise eine Ausnehmung in dem ersten Anschlusselement sein oder eine Erhebung bzw. ein Vorsprung. Der erste Anschluss kann beispielsweise auch durch einen Teil der Aufnahme gebildet sein, in dem die Detektoreinrichtung kraftschlüssig angeordnet ist. Beispielsweise ist es möglich, einen Durchgang in dem ersten Anschlusselement zumindest teilweise mit der Detektoreinrichtung zu bestücken, so dass der Rest den ersten Anschluss bilden kann. Der zweite Anschluss ist in diesem Falle ein Vorsprung, ein Bolzen oder dergleichen, der in diese Öffnung eingefügt wird.

Gemäß eines vorteilhaften Ausführungsbeispiels ist es möglich, dass der aus dem ersten Anschlusselement gebildete erste Anschluss ein Topf ist. Der Topf kann beispielsweise tiefgezogen sein. Der Topf kann zylindrisch oder kegelförmig oder in sonstiger Weise sich verjüngend geformt sein.

Gemäß eines vorteilhaften Ausführungsbeispiels wird vorgeschlagen, dass der zweite Anschluss eine den Topf kraftschlüssig aufnehmende Vertiefung oder ein in den Topf kraftschlüssig einsetzbarer Vorsprung ist. Je nach dem, ob der Topf des ersten Anschlusses aus dem ersten Anschlusselement herausragt oder in dieses hineinragt, ist der zweite Anschluss entsprechend geformt. Ragt der erste Anschluss aus dem ersten Anschlusselement heraus, ist der zweite Anschluss beispielsweise eine Vertiefung, in den der erste Anschluss einsetzbar ist. Ragt der erste Anschluss in das erste Anschlusselement hinein, kann der zweite Anschluss ein Vorsprung sein, der in den Topf einsetzbar ist.

Um eine thermische Aktivierung zu gewährleisten, wird vorgeschlagen, dass ein Zwischenraum zwischen dem ersten und dem zweiten Anschluss mit einem Trennmittel derart gefüllt ist, dass bei einer thermischen Aktivierung der Auslöseeinrichtung der erste Anschluss mechanisch und elektrisch von dem zweiten Anschluss trennbar ist. Das Trennmittel kann beispielsweise eine pyrotechnische Trennladung sein, die bei einer bestimmten Temperatur selbstständig zündet. Durch die thermische Aktivierung über die Detektoreinrichtung kann die Auslöseeinrichtung derart erwärmt werden, dass die Zündtemperatur des Trennmittels erreicht wird. Das Trennmittel explodiert und treibt den ersten Anschluss und den zweiten Anschluss auseinander, so dass eine elektrische und mechanische Trennung der Anschlüsse erfolgt.

Gemäß eines vorteilhaften Ausführungsbeispiels wird vorgeschlagen, dass die Auslöseeinrichtung zumindest teilweise die Detektoreinrichtung überlappend an dem ersten Anschlusselement angeordnet ist. Um eine gute thermische Kopplung zu gewährleisten, ist eine Überlappung zwischen Detektoreinrichtung und Anschlusselement möglich. Beispielsweise ist es möglich, den ersten Anschluss unmittelbar über der Detektoreinrichtung anzuordnen. Detektoreinrichtung und erster Anschluss können beispielsweise koliniar angeordnet sein. Die Detektoreinrichtung kann beispielsweise in einer Ausnehmung des ersten Anschlusselementes angeordnet sein und koliniar dazu kann in der Ausnehmung oder an dem Anschlusselement der erste Anschluss der Auslöseeinrichtung angeordnet sein. Hierbei ist es möglich, einen Vorsprung kraftschlüssig oder stoffschlüssig an dem ersten Anschlusselement anzuordnen, so dass sich die Detektoreinrichtung und der Anschluss überlappen. Beispielsweise ist es möglich, den Anschluss an der Anschlusseinrichtung zu verschweißen, beispielsweise mittels Reibschweißen, Ultraschallschweißen oder sonstiger Schweißverfahren.

Gemäß eines vorteilhaften Ausführungsbeispiels wird vorgeschlagen, dass eine Messeinrichtung zwischen dem ersten und dem zweiten Anschlusselement angeordnet ist, und dass mit der Messeinrichtung eine elektrische Kontaktierung zwischen dem ersten und dem zweiten Anschlusselement messbar ist. Im Verpolfall wird eine Trennung zwischen Versorgungsstützpunkt und erstem Anschlusselement nach einer bestimmten Zeit bewirkt. Der Benutzer merkt diese Trennung nicht unmittelbar, da dass Fahrzeug weiterhin normal betrieben werden kann, da die Batterie mit dem Bordnetz verbunden bleibt. Lediglich eine Fremdstarthilfe über den Versorgungsstützpunkt ist nicht mehr möglich, da der Versorgungsstützpunkt elektrisch von dem Rest des Bordnetzes getrennt ist, da die Auslöseeinrichtung aktiviert wurde. Um den Benutzer hierauf hinzuweisen und eine Reparatur in Gang zu setzen, ist die Messeinrichtung vorgesehen. Die Messeinrichtung führt eine Durchgangsmessung zwischen Versorgungsstützpunkt und erstem Anschlusselement durch. Ist die elektrische Verbindung getrennt, kann die Messeinrichtung ein Signal ausgeben, mit dessen Hilfe eine Serviceanzeige im Fahrzeug aktiviert wird, die anzeigt, dass eine Auslöseeinrichtung notwendig ist.

Wie zuvor beschrieben, soll die Detektoreinrichtung im Verpolfall das erste Anschlusselement mit dem zweiten Anschlusselement elektrisch verbinden und im Normalfall das erste Anschlusselement von dem zweiten Anschlusselement elektrisch isolieren. Gemäß eines vorteilhaften Ausführungsbeispiels ist daher die Detektoreinrichtung als Diode gebildet, die im Fall einer Verpolung in Durchlassrichtung betrieben ist.

Um das Bordnetz vor einer Überspannung an dem Versorgungsstützpunkt zu schützen, kann die Diode eine Zenerdiode sein. Die Zenerdiode, beispielsweise eine Leistungsdiode, bekann so geschaltet sein, dass die Durchbruchspannung dann erreicht ist, wenn der Versorgungsstützpunkt auf Potenzial liegt, welches über dem Potential der Batterie ist. Somit führt eine Überspannung zu einem Durchbruch der Zenerdiode und einem Stromfluss über die Detektoreinrichtung, so dass das Bordnetz geschützt bleibt.

Nachfolgend wird der Gegenstand anhand einer Ausführungsbeispiele zeigenden Zeichnung näher erläutert. In der Zeichnung zeigen:
- Fig. 1: ein vereinfachtes Blockschaltbild gemäß eines ersten Ausführungsbeispiels;
- Fig. 2: eine Ansicht einer Verpolschutzeinrichtung gemäß eines vorteilhaften Ausführungsbeispiels;
- Fig. 3: eine Schnittansicht gemäß eines vorteilhaften Ausführungsbeispiels;
- Fig. 4: eine weitere Schnittansicht eines vorteilhaften Ausführungsbeispiels;
- Fig. 5: eine weitere Schnittansicht gemäß eines vorteilhaften Ausführungsbeispiels;
- Fig. 6: eine zusätzliche Schnittansicht gemäß eines vorteilhaften Ausführungsbeispiels.

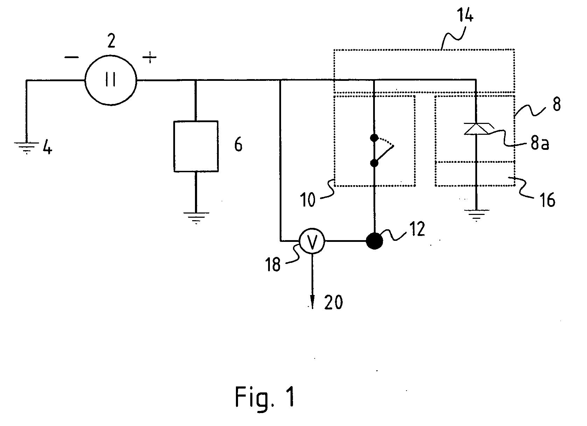

Fig. 1 zeigt schematisch eine Kraftfahrzeugbatterie 2, welche mit ihrem Minuspol am Potenzial der Fahrzeugkarosserie 4 verbunden ist. Der Pluspol der Kraftfahrzeugbatterie 2 ist elektrisch mit einem Bordnetz 6 verbunden. In dem Bordnetz 6 sind verschiedenste Verbraucher des Kraftfahrzeugs angeordnet. Parallel zum Bordnetz 6 ist eine Detektoreinrichtung 8 geschaltet. Ferner ist an dem Pluspol der Batterie 2 eine Auslöseeinrichtung 10 angeordnet, die den Pluspol der Batterie 2 mit einem Versorgungsstützpunkt 12 elektrisch verbindet.

Lediglich schematisch angedeutet ist ein erstes Anschlusselement 14, welches elektrisch auf dem Potenzial des Pluspoles der Batterie 2 liegt, und ein zweites Anschlusselement 16, welches die Detektoreinrichtung 8 mit dem Potenzial der Kraftfahrzeugkarosserie 4 verbindet.

Das erste Anschlusselement 14 ist über die Auslöseeinrichtung 10 elektrisch mit dem Versorgungsstützpunkt 12 verbunden.

Die Detektoreinrichtung 8 weist beispielsweise eine Diode 8a, beispielsweise eine Zenerdiode auf. Die Diode 8a kann beispielsweise derart angeordnet sein, dass wenn an den Versorgungsstützpunkt 12 eine positive Spannung, die die Spannung der Batterie 2 nicht oder nur geringwertig übersteigt, angelegt wird, die Diode 8 sperrt. Lediglich wenn die Spannung an dem Versorgungsstützpunkt 12 erheblich höher, beispielsweise zumindest doppelt so hoch, ist als die Spannung am Pluspol der Batterie 2, kann die Diode 8a beispielsweise in Sperrrichtung Durchbrechen und ein Stromfluss über die Diode 8a ist möglich. Beispielsweise wenn mit einer zu hohen Spannung die Batterie 2 über den Versorgungsstützpunkt 12 versorgt werden soll, bricht die Diode 8a durch und es fließt ein Strom über die Diode 8a. Das Bordnetz wird somit über die Diode 8a im Wesentlichen kurzgeschlossen. Die Durchbruchspannung beträgt in etwa ein Volt.

Im Verpolfall, beispielsweise wenn an dem Versorgungsstützpunkt 12 eine negative Spannung angelegt wird, die negativer ist, als das Potenzial der Fahrzeugkarosserie 4, wird die Diode 8a in Durchlassöffnung betrieben. In diesem Falle fließt ein Strom von dem Potenzial der Fahrzeugkarosserie 4 über die Diode 8a und die Auslöseeinrichtung 10 zu dem Versorgungsstützpunkt 12. Das Bordnetz 6 wird mit diesem Strom nicht belastet.

Der Fehlstrom kann mehrere 100A betragen. Es wird gefordert, dass dieser Fehlstrom über die Diode 8a für eine Dauer von mehr als 6 Sekunden möglich ist. Dauert die Verpolung jedoch länger, so erhitzt die Diode 8a und könnte zerstört werden, was dann dazu führte, dass der Fehlstrom über das Bordnetz 6 abgeleitet würde und eine Zerstörung des Bordnetzes verursachte. Um dies zu verhindern, sind die Detektoreinrichtung 8 und die Auslöseeinrichtung 10 thermisch derart miteinander verkoppelt, dass bei einer Erhitzung der Detektoreinrichtung 8, verursacht durch einen Strom im Verpolfall durch die Diode 8a, die Auslöseeinrichtung 10 thermisch aktiviert wird, derart, dass die Auslöseeinrichtung 10 den Versorgungsstützpunkt 12 elektrisch von dem ersten Anschlusselement 14 trennt. Diese Trennung kann dauerhaft sein, beispielsweise durch Auslösung eines pyrotechnischen Trennmittels. Der Versorgungsstützpunkt 12 ist nach einem Auslösen der Auslöseeinrichtung 10 von dem Rest des Bordnetzes 6 getrennt und ein Fehlstrom kann nicht mehr fließen, so dass eine Zerstörung des Bordnetzes 6 verhindert wird.

Zwischen dem ersten Anschlusselement 14 und dem Versorgungsstützpunkt 12 ist eine Messeinrichtung 18 geschaltet. Mit Hilfe der Messeinrichtung 18 ist eine Durchgangsmessung der Auslöseeinrichtung 10 möglich. Hiermit kann bestimmt werden, ob die Auslöseeinrichtung 10 das erste Anschlusselement 14 elektrisch mit dem Versorgungsstützpunkt 12 verbindet. In diesem Falle liegt zwischen dem Versorgungsstützpunkt 12 und dem ersten Anschlusselement 14 ein Kurzschluss an. Im Falle der Aktivierung der Auslöseeinrichtung 10 wird die Verbindung zwischen dem Versorgungsstützpunkt 12 und dem ersten Anschlusselement 14 getrennt, was wiederum über die Messeinrichtung 18 messbar ist. Die Messeinrichtung 18 gibt ein Ausgangssignal 20 aus, mit dessen Hilfe eine Wartung der Auslöseeinrichtung 10 angezeigt werden kann.

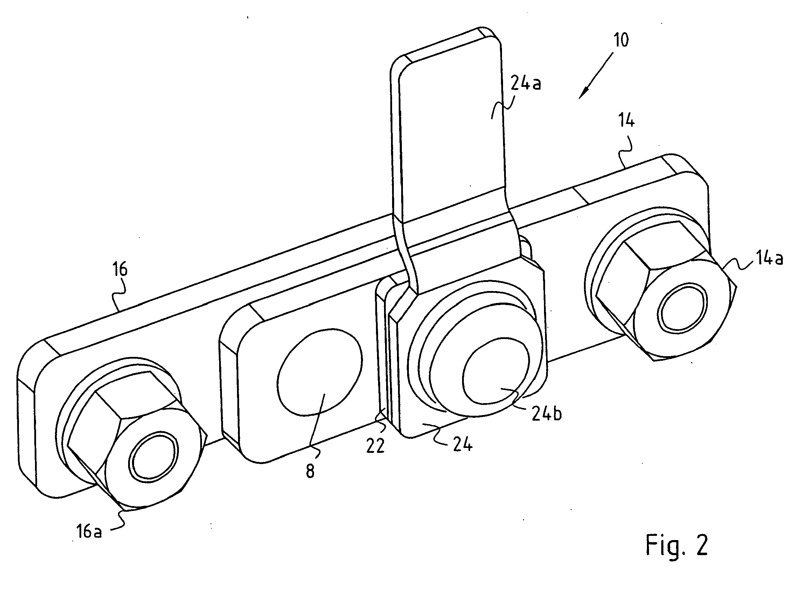

Fig. 2 zeigt eine Ansicht einer Verpolschutzeinrichtung gemäß eines vorteilhaften Ausführungsbeispiels. Zu erkennen ist ein als Flachteil gebildetes zweites Anschlusselement 16 und ein als Flachteil gebildetes erstes Anschlusselement 14. Das erste Anschlusselement 14 ist elektrisch gegenüber dem zweiten Anschlusselement 16 isoliert, jedoch überlappen die Anschlusselemente 14, 16 einander. Zwischen den Anschlusselementen 14, 16 ist die Detektoreinrichtung 8 angeordnet. Zu erkennen ist, dass die Detektoreinrichtung 8 in einer Bohrung in dem ersten Anschlusselement 14 angeordnet ist. Die Detektoreinrichtung 8 kann dabei kraftschlüssig in die Bohrung eingepresst sein oder auch mit der Bohrung verklebt sein oder stoffschlüssig mit der Bohrung verbunden sein, beispielsweise mittels Reibschweißen, Ultraschallschweißen, oder sonstiger Schweißverfahren.

Zu erkennen ist ein erster Kontakt der Detektoreinrichtung 8. Nicht zu erkennen ist ein zweiter Kontakt der Detektoreinrichtung 8, welcher elektrisch mit dem zweiten Anschlusselement 16 verbunden ist. An dem ersten Anschlusselement 14 ist die Auslöseeinrichtung 10 angeordnet. Die Auslöseeinrichtung 10 weist einen ersten Anschluss 22 und einen zweiten Anschluss 24 mit einer Anschlussfahne 24a zum Anschluss an den Versorgungsstützpunkt 12 auf. Zu erkennen ist, dass der zweite Anschluss 24 einen Topf 24b aufweist. Korrespondierend zu dem Topf 24b ist an dem ersten Anschluss 22 ebenfalls ein Topf gebildet, der in den Topf 24b hineinragt.

Zwischen dem ersten Anschluss 22 und dem zweiten Anschluss 24 bildet sich im Bereich des Topfes 24b ein Zwischenraum, in dem eine pyrotechnische Treibladung angeordnet sein kann. Im Falle einer Verpolung fließt ein sehr hoher Strom von der Anschluss fahne 24a, über den Anschluss 24, den Anschluss 22, das ersten Anschlusselement 14, und die Detektoreinrichtung 8 zu dem zweiten Anschlusselement 16. Dieser Strom führt zu einer Wärmeentwicklung in der Detektoreinrichtung 8. Diese Wärme wird über das erste Anschlusselement 14 an den ersten Anschluss 22 eingeleitet, was nach einer bestimmten Zeit zu einer thermischen Aktivierung der pyrotechnischen Trennladung führt. Hierbei wird der erste Anschluss 22 von dem zweiten Anschluss 24 abgesprengt. Somit ist die Anschlussfahne 24a, die mit dem Versorgungsstützpunkt 12 verbunden ist, elektrisch von dem ersten Anschlusselement 14 getrennt und ein Stromfluss ist nicht mehr möglich, die Quelle der Verpolung ist vom Bordnetz 6 getrennt.

Das erste Anschlusselement 14 kann über eine Verbindung 14a mit dem positiven Pol der Batterie 2 verbunden sein. Das zweite Anschlusselement 16 kann mit einer Verbindung 16a mit der Fahrzeugkarosserie 4 verbunden sein.

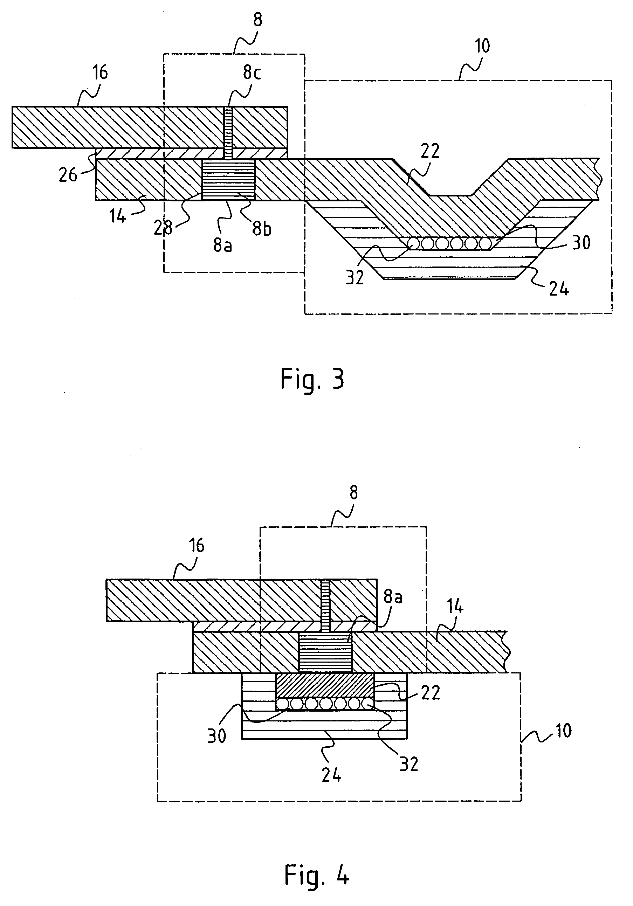

Fig. 3 zeigt schematisch eine Schnittansicht gemäß eines vorteilhaften Ausführungsbeispiels. Zu erkennen ist das zweite Anschlusselement 16 und das erste Anschlusselement 14. Zwischen dem zweiten Anschlusselement 16 und dem ersten Anschlusselement 14 ist eine Isolationsschicht 26 angeordnet. In einer Ausnehmung 28 in dem ersten Anschlusselement 14, beispielsweise in Form einer Bohrung, ist ein erster Kontakt 8b der Diode 8a der Detektoreinrichtung 8 angeordnet. Der Kontakt 8b ist entlang seiner Mantelfläche stoffschlüssig mit dem ersten Anschlusselement 14 verbunden.

Ein zweiter Kontakt 8c der Diode 8a durchstößt die Isolationsschicht 26 und ist elektrisch mit dem zweiten Anschlusselement 16 verbunden. Die Kathode der Diode 8a kann durch den Kontakt 8b gebildet sein und die Anode der Diode 8a durch den Kontakt 8c.

Ferner ist einstückig aus dem ersten Anschlusselement 14 ein Topf tiefgezogen, welcher einen ersten Anschluss 22 bildet. Korrespondierend zu dem ersten Anschluss 22 ist ein zweiter Anschluss 24 an dem Topf angeordnet. Der zweite Anschluss 24 ist kraftschlüssig mit dem ersten Anschluss 22 verbunden. In einem Zwischenraum 30 zwischen dem ersten Anschluss 22 und dem zweiten Anschluss 24 ist eine pyrotechnische Treibladung 32 vorgesehen. Im Verpolfall oder im Fall einer zu hohen Ladespannung fließt ein Strom über die Diode 8a, welcher zu einer Erhitzung der Diode 8a führt. Die durch den Strom erzeugte thermische Wärme wird über das erste Anschlusselement 14 in den ersten Anschluss 22 geleitet. Wird die Temperatur zu groß, wird die pyrotechnische Treibladung 32 gezündet und der erste Anschluss elektrisch und mechanisch von dem zweiten Anschluss 24 getrennt.

Fig. 4 zeigt ein weiteres Ausführungsbeispiel. Bei dem in Fig. 4 gezeigten Ausführungsbeispiel ist koaxial zu der Diode 8a der erste Anschluss 22 auf dem ersten Anschlusselement 14 angeordnet. Hierbei kann der erste Anschluss 22 stoffschlüssig mit dem ersten Anschlusselement 14 und/oder der Diode 8a verbunden sein. Beispielsweise kann der erste Anschluss 22 eine Platte sein, die mittels eines Schweißverfahrens, beispielsweise eines Reibschweißverfahrens oder eines Ultraschallschweißverfahrens oder eines sonstigen Schweißverfahrens mit dem ersten Anschlusselement 14 und/oder der Diode 8a stoffschlüssig verbunden sein. Auch ist es möglich, dass der erste Anschluss 22 elektrisch leitend mit dem ersten Anschlusselement 14 und/oder der Diode 8a verklebt oder in sonstiger Weise verbunden ist.

Über den Versorgungsstützpunkt 12 wird eine Spannung über den zweiten Anschluss 24, den ersten Anschluss 22 in das erste Anschlusselement 14 eingeleitet. Im Falle der richtigen Polung wird die Batterie 2 über das erste Anschlusselement 14 mit dem Versorgungsstützpunkt 12 elektrisch verbunden und die Batterie kann aufgeladen werden. Im Falle einer Verpolung fließt jedoch ein Strom nicht von dem ersten Anschlusselement 14 zu der Batterie 2, sondern über die Diode 8a zu dem zweiten Anschlusselement 16. Dieser Strom bewirkt eine Erhitzung der Diode 8a, welche wiederum eine thermische Aktivierung der pyrotechnischen Treibladung 32 bewirkt.

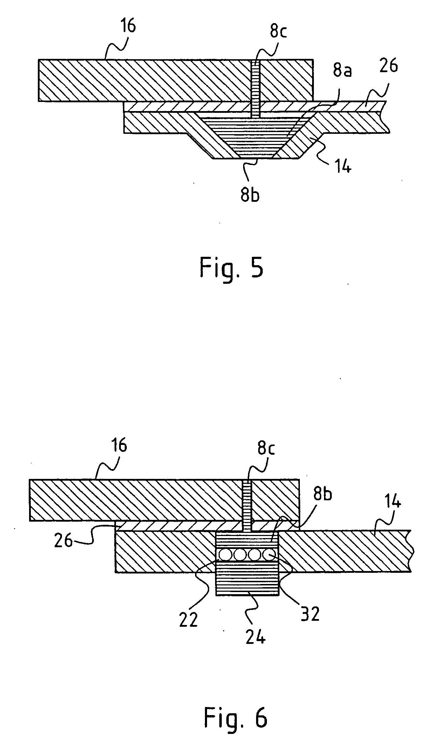

Fig. 5 zeigt schematisch ein weiteres Ausführungsbeispiel, bei dem die Detektoreinrichtung 8 und die Auslöseeinrichtung 10 in einem Topf des ersten Anschlusselementes 14 angeordnet sind. Die Diode 8a ist in einem tiefgezogenen Topf des ersten Anschlusselementes 14 angeordnet, wobei ein erster Kontakt 8b der Diode 8a mit dem ersten Anschlusselement 14 verbunden ist und ein zweiter Kontakt 8c der Diode 8a mit dem zweiten Anschlusselement 16 verbunden ist. Der Topf in dem ersten Anschlusselement 14 bildet gleichzeitig den ersten Anschluss 22. Auf den ersten Anschluss 22 kann (nicht gezeigt) der zweite Anschluss 24 aufgebracht werden, und in einen Zwischenraum eine pyrotechnische Treibladung 32 angeordnet werden. In dem gezeigten Fall ist die pyrotechnische Treibladung 32 in unmittelbarem Kontakt mit der Diode 8a bzw. dem Kontakt 8b der Diode 8a, so dass eine unmittelbare thermische Aktivierung möglich ist.

Fig. 6 zeigt ein weiteres Ausführungsbeispiel. Bei dem in Fig. 6 gezeigten Ausführungsbeispiel ist ein Kontakt 8b der Diode 8a in einer Bohrung in dem ersten Anschlusselement 14 nur teilweise angeordnet. Ein weiterer Teil der Bohrung in dem Anschlusselement 14 kann als erster Anschluss 22 dienen, in dem er eine Aufnahme für den zweiten Anschluss 24 bildet. Der zweite Anschluss 24 kann kraftschlüssig in der Bohrung angeordnet werden. Zwischen dem Kontakt 8b der Diode 8a und dem zweiten Anschluss 24 kann die pyrotechnische Treibladung 32 angeordnet werden. Ein elektrischer Kontakt zwischen dem zweiten Anschluss 24 und dem Kontakt 8b der Diode 8 ist über das zweite Anschlusselement 14 möglich. Im Aktivierungsfall wird der zweite Anschluss 24 aus der Bohrung des ersten Anschlusselementes 14 gesprengt.

Mit Hilfe der gegenständlichen Verpolschutzeinrichtung ist es möglich, in kostengünstiger Weise eine Zerstörung des Bordnetzes durch eine Verpolung zu verhindern. Der konstruktive Aufwand ist minimal.

## Patentansprüche

1. Verpolschutzeinrichtung für Kraftfahrzeuge mit
- einer Detektoreinrichtung (8),
- einem ersten mit der Detektoreinrichtung (8) und einem Fremdstartstützpunkt (12) verbundenem Anschlusselement (14), wobei das erste Anschlusselement mit einem elektrischen Pluspotential einer Fahrzeugbatterie (2) verbunden ist,
- einem zweiten mit der Detektoreinrichtüng (8) und einem elektrisch mit dem Potential der Fahrzeugkarosserie verbindbaren Anschlusselement (16),
- wobei die Detektoreinrichtung (8) derart gebildet ist, dass im Falle einer Verpolung des Fremdstartstützpunktes (12) das erste Anschlusselement (14) mit dem zweiten Anschlusselement (16) über die Detektoreinrichtung (8) elektrisch miteinander verbunden sind,
**dadurch gekennzeichnet, dass**
- zwischen dem ersten Anschlusselement (14) und dem Fremdstartstützpunkt (12) eine Auslöseeinrichtung (10) angeordnet ist, wobei
- die Auslöseeinrichtung (10) durch die im Falle einer Verpolung in der Detektoreinrichtung (8) durch den in der Detektoreinrichtung (8) fließenden Strom erzeugte Joulesche Wärme derart thermisch aktiviert wird, dass die Auslöseeinrichtung (10) eine elektrische Verbindung zwischen dem Fremdstartstützpunkt (12) und dem ersten Anschlusselement (14) trennt.

2. Verpolschutzeinrichtung nach Anspruch 1, **dadurch gekennzeichnet, dass** die Detektoreinrichtung (8), das erste Anschlusselement (14) und die Auslöseeinrichtung (10) thermisch derart miteinander gekoppelt sind, dass im Falle einer Verpolung die in der Detektoreinrichtung (8) durch den in der Detektoreinrichtung (8) fließenden Strom erzeugte Joulesche Wärme die Auslöseeinrichtung (10) thermisch aktiviert.

3. Verpolschutzeinrichtung nach einem der Ansprüche 1 bis 2, **dadurch gekennzeichnet, dass** das erste Anschlusselement (14) als ein eine Aufnahme aufweisendes Flachteil gebildet ist und dass die Detektoreinrichtung (8) kraftschlüssig in der Aufnahme angeordnet ist.

4. Verpolschutzeinrichtung nach Anspruch 3, **dadurch gekennzeichnet, dass** die Aufnahme ein in dem Flachteil gebildeter Topf ist.

5. Verpolschutzeinrichtung nach einem der Ansprüche 1 bis 4, **dadurch gekennzeichnet, dass** das zweite Anschlusselement (16) als Flachteil gebildet ist.

6. Verpolschutzeinrichtung nach einem der Ansprüche 1 bis 5, **dadurch gekennzeichnet, dass** das ersten Anschlusselement (14) und das zweite Anschlusselement (16) überlappend, elektrisch isoliert zueinander verbunden sind und dass die Detektoreinrichtung (8) zumindest teilweise zwischen dem ersten und dem zweiten Anschlusselement derart angeordnet ist, dass im Falle einer Verpolung des Versorgungsstützpunktes (12) das erste Anschlusselement (14 mit dem zweiten Anschlusselement (16) über die Detektoreinrichtung (8) elektrisch miteinander verbunden sind.

7. Verpolschutzeinrichtung nach einem der Ansprüche 1 bis 6, **dadurch gekennzeichnet, dass** die Auslöseeinrichtung (10) mit einem ersten Anschluss (22) mit dem ersten Anschlusselement (14) verbunden ist und dass ein zweiter Anschluss (24) der Auslöseeinrichtung (10) kraftschlüssig mit dem ersten Anschluss (22) verbunden ist.

8. Verpolschutzeinrichtung nach einem der Ansprüche 1 bis 7, **dadurch gekennzeichnet, dass** die Auslöseeinrichtung (10) einen einstückig aus dem ersten Anschlusselement (14) gebildeten ersten Anschluss (22) aufweist und dass ein zweiter Anschluss (24) der Auslöseeinrichtung (10) kraftschlüssig mit dem ersten Anschluss (22) verbunden ist.

9. Verpolschutzeinrichtung nach Anspruch 8, **dadurch gekennzeichnet, dass** der einstückig aus dem ersten Anschlusselement (14) gebildete erste Anschluss (22) ein Topf ist.

10. Verpolschutzeinrichtung nach Anspruch 9, **dadurch gekennzeichnete, dass** der zweite Anschluss (24) eine den Topf kraftschlüssig aufnehmende Vertiefung oder ein in den Topf kraftschlüssig einsetzbarer Vorsprung ist.

11. Verpolschutzeinrichtung nach einem der Ansprüche 7 bis 10, **dadurch gekennzeichnet, dass** ein Zwischenraum (30) zwischen dem ersten und dem zweiten Anschluss (22, 24) mit einem Trennmittel (32) derart gefüllt ist, dass bei einer thermischen Aktivierung der Auslöseeinrichtung (10) der erste Anschluss (22) mechanisch und elektrisch von dem zweiten Anschluss (24) trennbar ist.

12. Verpolschutzeinrichtung nach einem der Ansprüche 1 bis 11, **dadurch gekennzeichnet, dass** die Auslöseeinrichtung (10) zumindest teilweise die Detektoreinrichtung (8) überlappend an dem ersten Anschlusselement (14) angeordnet ist

13. Verpolschutzeinrichtung nach einem der Ansprüche 1 bis 12, dadurch gekenzichnet, dass eine Messeinrichtung (18) zwischen dem ersten und dem zweiten Anschlusselement (14, 16) angeordnet ist, und dass mit der Messeinrichtung (18) eine elektrische Kontaktierung zwischen dem ersten und dem zweiten Anschlusselement (14, 16) messbar ist.

14. Verpolschutzeinrichtung nach einem der Ansprüche 1 bis 13, **dadurch gekennzeichnet, dass** die Detektoreinrichtung (8) eine Diode ist, die im Falle einer Verpolung in Durchlassrichtung betrieben ist.

## Claims

1. Reverse polarity protection unit for motor vehicles having
- a detector device (8),
- a first connection element (14) connected to the detector device (8) and a jump start point (12), the first connection element being connected to a positive electrical potential of a vehicle battery (2),
- a second connection element (16) which can be connected to the detector device (8) and electrically to the potential of the vehicle chassis,
- the detector device (8) being formed in such a way that in the event of reverse polarity of the jump start point (12) the first connection element (14) and the second connection element (16) are electrically connected to each other via the detector device (8),
**characterised in that**
- a trigger device (10) is arranged between the first connection element (12) and the jump start point (12),
- the trigger device (10) being thermally activated by the Joule heating generated by the current flowing through the detector device (8) in the event of a reverse polarity in the detector device in such a way that the trigger device (10) breaks an electrical connection between the jump start point (12) and the first connection element (14).

2. Reverse polarity protection unit according to Claim 1, **characterised in that** the detector device (8), the first connection element (14) and the trigger device (10) are thermally coupled to each other in such a way that in the event of a reverse polarity the Joule heating generated in the detector device (8) by the current flowing through the detector device (8) thermally activates the trigger device (10).

3. Reverse polarity protection unit according to any one of Claims 1 to 2, **characterised in that** the first connection element (14) is formed as a flat component with a socket and **in that** the detector device (8) is non-positively arranged in the socket.

4. Reverse polarity protection unit according to Claim 3, **characterised in that** the socket is a cup formed in the flat component.

5. Reverse polarity protection unit according to any one of Claims 1 to 4, **characterised in that** the second connection element (16) is formed as a flat component.

6. Reverse polarity protection unit according to any one of Claims 1 to 5, **characterised in that** the first connection element (14) and the second connection element (16) are connected in overlapping manner and electrically isolated from each other and **in that** the detector device (8) is arranged at least partially between the first and the second connection element in such a way that in the event of a reverse polarity of the supply point (12) the first connection element (14) is electrically connected to the second connection element (16) via the detector device (8).

7. Reverse polarity protection unit according to any one of Claims 1 to 6, **characterised in that** the trigger device (10) is connected to a first connection (22) with the first connection element (14) and **in that** a second connection (24) of the trigger device (10) is non-positively connected to the first connection (22).

8. Reverse polarity protection unit according to any one of Claims 1 to 7, **characterised in that** the trigger device (10) has a first connection (22) formed as a single piece from the first connection element (14) and **in that** a second connection (24) of the trigger device (10) is non-positively connected to the first connection (22).

9. Reverse polarity protection unit according to Claim 8, **characterised in that** the first connection (22) formed as a single piece from the first connection element (14) is a cup.

10. Reverse polarity protection unit according to Claim 9, **characterised in that** the second connection (24) is a depression non-positively accommodating the cup or a projection that may be non-positively inserted into the cup.

11. Reverse polarity protection unit according to any one of Claims 7 to 10, **characterised in that** a space (30) between the first and second connections (22, 24) is filled with a separating agent (32) in such a way that in the event of a thermal activation of the trigger device (10) the first connection (22) can be separated mechanically and electrically from the second connection (24).

12. Reverse polarity protection unit according to any one of Claims 1 to 11, **characterised in that** the trigger device (10) is arranged on the first connection element (14) at least partially overlapping the detector device (8).

13. Reverse polarity protection unit according to any one of Claims 1 to 12, **characterised in that** a measuring device (18) is arranged between the first and second connection elements (14, 16) and **in that** electrical contact between the first and second connection elements (14, 16) can be measured using the measuring device (18).

14. Reverse polarity protection unit according to any one of Claims 1 to 13, **characterised in that** the detector device (8) is a diode which is operated in forward direction in the event of a reverse polarity.

## Revendications

1. Dispositif de protection contre l'inversion de polarité pour véhicule automobile, avec
- un dispositif de détection (8),
- un premier élément de raccordement (14) relié au dispositif de détection (8) et à un point de raccordement pour alimentation externe (12), sachant que le premier élément de raccordement est relié à un potentiel électrique positif d'une batterie (2) de véhicule automobile,
- un deuxième élément de raccordement (16), qui peut être relié au dispositif de détection (8) et à un potentiel électrique de la carrosserie du véhicule automobile,
- sachant que le dispositif de détection (8) est conçu de sorte que le premier élément de raccordement (14) soit relié au deuxième élément de raccordement (16) par l'intermédiaire du dispositif de détection (8), en cas d'une inversion de polarité du point de raccordement pour alimentation externe (12),
**caractérisé en ce que**
- entre le premier élément de raccordement (14) et le point de raccordement pour alimentation externe (12) est agencé un dispositif de déclenchement (10), sachant que le dispositif de déclenchement (10) est activé thermiquement par l' effet Joule, généré dans le dispositif de détection (8) par le courant passant par ledit dispositif de détection (8), en cas d'inversion de polarité, de sorte que le dispositif de déclenchement (10) sépare la liaison électrique entre le point de raccordement pour alimentation externe (12) et le premier élément de raccordement (14).

2. Dispositif de protection contre l'inversion de polarité selon la revendication 1, **caractérisé en ce que** le dispositif de détection (8), le premier élément de raccordement (14) et le dispositif de déclenchement (10) sont couplés thermiquement ensemble de sorte que l'effet joule, généré dans le dispositif de détection (8) par le courant passant par ledit dispositif de détection (8), active thermiquement le dispositif de déclenchement (10), en cas d'inversion de polarité.

3. Dispositif de protection contre l'inversion de polarité selon l'une des revendications 1 à 2, **caractérisé en ce que** le premier élément de raccordement (14) est réalisé en tant que pièce plane dotée d'un logement et que le dispositif de détection (8) est maintenu par adhérence dans ledit logement.

4. Dispositif de protection contre l'inversion de polarité selon la revendication 3, **caractérisé en ce que** le logement est un pot, qui est formé dans la pièce plane.

5. Dispositif de protection contre l'inversion de polarité selon l'une des revendications 1 à 4, **caractérisé en ce que** le deuxième élément de raccordement (16) est réalisé en tant que pièce plane.

6. Dispositif de protection contre l'inversion de polarité selon l'une des revendications 1 à 5, **caractérisé en ce que** le premier élément de raccordement (14) et le deuxième élément de raccordement (16) sont reliés ensemble en chevauchement et isolés électriquement l'un par rapport à l'autre, et que le dispositif de détection (8) est disposé, au moins partiellement, entre le premier élément de raccordement et le deuxième élément de raccordement, de sorte que le premier élément de raccordement (14) et le deuxième élément de raccordement (16) soient reliés ensemble électriquement par l'intermédiaire du dispositif de détection (8), en cas d'inversion de polarité du point de raccordement pour alimentation externe (12).

7. Dispositif de protection contre l'inversion de polarité selon l'une des revendications 1 à 6, **caractérisé en ce que** le dispositif de déclenchement (10) est relié avec un premier raccord (22) au premier élément de raccordement (14) et qu'un deuxième raccord (24) du dispositif de déclenchement (10) est relié par adhérence au premier raccord (22).

8. Dispositif de protection contre l'inversion de polarité selon l'une des revendications 1 à 7 **caractérisé en ce que** le dispositif de déclenchement (10) est doté d' un premier raccord (22) formé d'une pièce à partir du premier élément de raccordement (14) et qu'un deuxième raccord (24) du dispositif de déclenchement (10) est relié par adhérence au premier raccord (22).

9. Dispositif de protection contre l'inversion de polarité selon la revendication 8, **caractérisé en ce que** le premier raccord (22), formé d'une pièce à partir du premier élément de raccordement (14), est un pot.

10. Dispositif de protection contre l'inversion de polarité selon la revendication 9, **caractérisé en ce que** le deuxième raccord (24) est une cavité, dans lequel le pot est logé par adhérence, ou une saillie, qui peut être insérée dans le pot.

11. Dispositif de protection contre l'inversion de polarité selon l'une des revendications 7 à 10, **caractérisé en ce qu'**un intervalle (30) entre le premier et le deuxième raccord (22, 24) est rempli avec un agent séparateur (32) de sorte que, lors d'une activation thermique du dispositif de déclenchement (10), le premier raccord (22) peut être séparé mécaniquement et électriquement du deuxième raccord (24).

12. Dispositif de protection contre l'inversion de polarité selon l'une des revendications 1 à 11, **caractérisé en ce que** le dispositif de déclenchement (10) est agencé sur le premier élément de raccordement (14), en chevauchant, au moins partiellement, le dispositif de détection (8).

13. Dispositif de protection contre l'inversion de polarité selon l'une des revendications 1 à 12, **caractérisé en ce qu'**un dispositif de mesure (18) est agencé entre le premier et le deuxième élément de raccordement (14, 16), et que ledit dispositif de mesure (18) permet de mesurer une mise en contact électrique entre le premier et le deuxième élément de raccordement (14, 16).

14. Dispositif de protection contre l'inversion de polarité selon l'une des revendications 1 à 13, **caractérisé en ce que** le dispositif de détection (8) est une diode, qui, en cas d'inversion de polarité, est exploitée dans le sens passant.
